# EUROPÄISCHE PATENTANMELDUNG

(11) **EP 4 369 543 A1**
(43) Veröffentlichungstag der Anmeldung: **15.05.2024**
(21) Anmeldenummer: 23208248.7
(22) Anmeldetag: 07.11.2023
(51) Int. Cl.: H02G 13/00, H02G 3/30, E04D 13/00

(54) **HALTEVORRICHTUNG FÜR EINE FANGLEITUNG EINES BLITZSCHUTZSYSTEMS, BLITZSCHUTZSYSTEM UND VERWENDUNG EINER HALTEVORRICHTUNG**

(30) Priorität: 09.11.2022 DE 102022129609
(71) Anmelder: DEHN SE, 92318 Neumarkt i.d. OPf. (DE)
(72) Erfinder: Braun, Christian, 92318 Neumarkt i.d.Opf. (DE); Lang, Johanna, 92318 Neumarkt i.d.Opf. (DE)
(74) Vertreter: Prinz & Partner mbB

(57) **Zusammenfassung**

Eine Haltevorrichtung (10) für eine Fangleitung (12) eines Blitzschutzsystems (14) hat einen Halteabschnitt (16) zur Aufnahme der Fangleitung (12) sowie einen Montageabschnitt (22) zum Befestigen der Haltevorrichtung (10) auf einer unebenen Oberfläche (40). Zumindest der Montageabschnitt (22) der Haltevorrichtung (10) ist verformbar ausgestaltet, sodass der Montageabschnitt (22) an eine Kontur (38) der Oberfläche (40) anpassbar ist. Der Montageabschnitt (22) hat an einer in Einbauposition mit der Kontur (38) der Oberfläche (40) zusammenwirkenden Kontaktfläche einen Reibbereich (37), der einen höheren Reibwert als die Haltevorrichtung (10) auf einer zur Kontaktfläche entgegengesetzten Seite aufweist.

## Beschreibung

Die Erfindung betrifft eine Haltevorrichtung für eine Fangleitung eines Blitzschutzsystems, ein Blitzschutzsystem mit einer solchen Haltevorrichtung sowie die Verwendung einer Haltevorrichtung zum Befestigen einer Fangleitung.

Durch ein Blitzschutzsystem wird im Falle eines Blitzeinschlags ein Blitzstrompfad an einem zu schützenden Objekt, zum Beispiel einem Gebäude, vorbeigeführt und abgeleitet. So können Schäden an dem zu schützenden Objekt verringert oder vermieden werden.

Übliche Dach- und Fassadenleitungen von Blitzschutzsystemen werden über eine Halterung direkt am zu schützenden Objekt befestigt. In diesem Zusammenhang stellt sich das Problem, dass die Halterung auch an unebenen Oberflächen befestigt werden muss, beispielsweise einem Wellblechdach oder einem Trapezblechdach.

Es ist bekannt, in solchen Einsatzszenarien die Halterung mittels Schrauben oder Nieten an der Oberfläche anzubringen oder zusätzliche Halterunterteile zwischen Komponenten der jeweiligen Oberfläche, beispielsweise Elementen eines Dachsystems, zu befestigen. Beispielsweise sind Halterungen bekannt, die über Haltezungen Ziegel eines Daches umgreifen und auf diese Weise befestigt werden.

All diesen Lösungen ist jedoch gemein, dass sie mit einem hohen Aufwand einhergehen, den Einsatz von Werkzeug erfordern und/oder Ausgangspunkte für Beschädigungen der jeweiligen Oberfläche darstellen können, beispielsweise Undichtigkeiten.

Zudem sind Halterungen bekannt, die über ein Klebepad zum Anbringen der Halterung verfügen, wie beispielsweise in der US 2015/0014015 A1 beschrieben. Derartige Lösungen eignen sich jedoch ausschließlich zum Anbringen der Halterung auf speziellen Oberflächen, nämlich ebenen Oberflächen, damit das Klebepad eine große Kontaktfläche hat. Eine Verwendung auf rauen Oberflächen oder Wellblech- und Trapazblechdächern ist mit diesen Halterungen jedoch nicht möglich.

Die Aufgabe der Erfindung ist es, das Anbringen einer Fangleitung eines Blitzschutzsystems, insbesondere werkzeuglos, in flexibler Weise zu ermöglichen.

Die Aufgabe wird erfindungsgemäß gelöst durch eine Haltevorrichtung für eine Fangleitung eines Blitzschutzsystems, mit einem Halteabschnitt zur Aufnahme der Fangleitung sowie einem Montageabschnitt zum Befestigen der Haltevorrichtung auf einer unebenen Oberfläche. Zumindest der Montageabschnitt der Haltevorrichtung ist verformbar ausgestaltet, sodass der Montageabschnitt an eine Kontur der Oberfläche anpassbar ist. Der Montageabschnitt hat an einer in Einbauposition mit der Kontur der Oberfläche zusammenwirkenden Kontaktfläche einen Reibbereich, der einen höheren Reibwert aufweist als die Haltevorrichtung auf einer zur Kontaktfläche entgegengesetzten Seite.

Der Begriff "unebene Oberfläche" bedeutet, dass an der Oberfläche nicht nur unwesentliche, materialbedingte Strukturen in der Oberfläche vorhanden sind, sondern die Oberfläche eine definierte Form hat, die sich von einer ebenen Oberfläche unterscheidet.

Beispielsweise weist die unebene Oberfläche einen maximalen Höhenunterschied von 0,1 mm bis 10 cm auf in einer Fläche auf, die der Größe des Montageabschnitts entspricht. Beispielsweise ist die unebene Oberfläche Teil einer Fassade oder eines Dachs, insbesondere eines Wellblechdachs oder eines Trapezblechdachs. Die Oberfläche kann eine Oberfläche eines Metalldachs sein, welches typischerweise als Wellblechdach oder Trapezblechdach ausgebildet ist.

In einer Variante weist die unebene Oberfläche einen maximalen Höhenunterschied im Bereich von 0,1 mm bis 10 mm auf. In dieser Variante ist die unebene Oberfläche beispielsweise ein strukturiertes Fassaden- oder Dachelement.

In einer anderen Variante weist die unebene Oberfläche einen maximalen Höhenunterschied im Bereich von 1 cm bis 10 cm auf, insbesondere von 1 cm bis 6 cm, bevorzugt von 2 cm bis 6 cm.

Die zur Kontaktfläche entgegengesetzte Seite bezeichnet insbesondere die Seite des Montageabschnitts, die unmittelbar zur Seite des Montageabschnitts entgegengesetzt ist, an der der Reibbereich angebracht ist. Beispielsweise ist der Reibbereich an einer Unterseite des Montageabschnitts vorgesehen, sodass die entgegengesetzte Seite die Oberseite des Montageabschnitts bezeichnet.

Die Erfindung basiert auf dem Grundgedanken, einen Halteabschnitt vorzusehen, der gezielt an die jeweils vorhandene Kontur der unebenen Oberfläche, auf welcher die Haltevorrichtung angebracht werden soll, angepasst werden kann. Auf diese Weise kann die erfindungsgemäße Haltevorrichtung flexibel an verschiedensten Einsatzorten verwendet werden, sodass es nicht notwendig ist, spezielle Haltevorrichtungen für verschiedene Einsatzorte bzw. Anwendungen vorzusehen, wodurch Kosten eingespart werden können. Es entfallen nämlich Lagerkosten für die unterschiedlichen speziellen Haltevorrichtungen. Außerdem lässt sich die Montagezeit deutlich reduzieren, da nicht zuerst überprüft werden muss, welche spezielle Haltevorrichtung für den Einsatzort am geeignetsten ist.

Zugleich sorgt der am Montageabschnitt vorgesehene Reibbereich dafür, dass die Haltevorrichtung werkzeuglos auf der Oberfläche angebracht werden kann. Anders ausgedrückt wird die Haltevorrichtung über die Wechselwirkung zwischen dem Reibbereich und der Kontur der Oberfläche gegen ein Verrutschen gesichert und somit die Haltevorrichtung an der Oberfläche befestigt.

Der Reibbereich kann integraler Bestandteil des Montageabschnitts oder eine an den Montageabschnitt angebrachte weitere Komponente sein.

Insbesondere stellt der Reibbereich sicher, dass die Haltevorrichtung nichtinvasiv an der Oberfläche angebracht werden kann, also beschädigungsfrei. Eine in die Oberfläche eingebrachte Schraube, ein in die Oberfläche eingebrachter Nagel oder ähnliches beschädigt nämlich die Oberfläche, wodurch es zu Undichtigkeiten kommen kann.

In einer Variante ist der Reibbereich durch eine Aufrauung des Montageabschnitts im Bereich der Kontaktfläche ausgebildet. Eine Aufrauung ist einfach auszubilden und stellt insbesondere bei ebenfalls aufgerauten Oberflächen ein zuverlässiges Mittel dar, um die Haltevorrichtung auf der entsprechenden Oberfläche zu fixieren. Der Montageabschnitt kann also aufgeraut worden sein, um die Aufrauung zu erhalten.

In einer weiteren Variante ist der Reibbereich über ein Reibmaterial bereitgestellt, das stoffschlüssig mit dem Montageabschnitt verbunden ist.

Beispielsweise umfasst das Reibmaterial ein Klettband und/oder ein Klebepad, das mit dem Montageabschnitt der Haltevorrichtung stoffschlüssig verbunden ist. Auf diese Weise ist eine besonders einfache und werkzeuglose Montage der Haltevorrichtung möglich, da der Montageabschnitt lediglich an die Kontur der Oberfläche angepasst und der Reibbereich mit der Kontur der Oberfläche zusammengeführt werden muss, um die Haltevorrichtung zu fixieren. Beispielsweise wird die Haltevorrichtung auf die Oberfläche aufgeklebt.

Das Klebepad ist beispielsweise ein doppelseitiges Klebepad.

Der Einsatz eines Klebepads ermöglicht eine besonders einfache Montage der Haltevorrichtung, da auf aufwendige Prozesse wie das Auftragen eines Klebstoffs aus einem Gebinde verzichtet werden kann.

Sofern das Reibmaterial ein Klettband umfasst oder ist, verfügt die Kontur der Oberfläche an der Kontaktfläche über ein komplementäres Gegenstück zum Klettband des Reibmaterials, also beispielsweise ein Gegenstück für eine Klettstruktur des Klettbands. Das Klettband kann auf der zur Klettstruktur entgegengesetzten Seite ein Klebematerial aufweisen.

Ebenso kann das Reibmaterial, beispielsweise ein als Klebematerial ausgebildetes Reibmaterial, stoffschlüssig am Montageabschnitt vorliegen, beispielsweise angespritzt oder anvulkanisiert worden sein.

Der Montageabschnitt kann ein Metallblech sein, an dem mittig der Halteabschnitt vorgesehen ist, insbesondere wobei zwei sich von der Mitte ausgehend in entgegengesetzte Richtungen erstreckende Befestigungsabschnitte vorhanden sind, an denen jeweils ein Reibbereich vorgesehen ist.

Metallbleche bieten eine hohe Widerstandfähigkeit, insbesondere auch gegen Wettereinflüsse, und sind zudem formbar, sodass sie sich in besonderem Maße für die Verwendung als Montageabschnitt eignen.

Durch den Einsatz von mehreren Befestigungsabschnitten, die sich in entgegengesetzte Richtungen erstrecken, kann der Montageabschnitt besonders gleichmäßig fixiert werden, insbesondere im Fall, dass die Befestigungsabschnitte symmetrisch ausgestaltet sind. Zudem kann die Kontur der Oberfläche von mehreren Seiten von den Befestigungsabschnitten umschlossen werden. Dies ist insbesondere von Vorteil, wenn die Oberfläche ein Wellblechdach oder ein Trapezdach ist.

Das Metallblech kann ein dem Halteabschnitt zugeordneten Zentralbereich aufweisen.

Die Reibbereiche können lediglich auf den Befestigungsabschnitten ausgebildet sein. Wird beispielsweise auf ein Klettband und/oder ein Klebepad zurückgegriffen, um das Reibmaterial bereitzustellen, kann sich das Klettband und/oder das Klebepad am jeweiligen Befestigungsabschnitt lediglich über den gesamten Befestigungsabschnitt oder einen Teilbereich des Befestigungsabschnitts erstrecken, jedoch nicht bis in den Zentralbereich.

Die jeweiligen Reibbereiche der Befestigungsabschnitte können sich auch über die Befestigungsabschnitte hinaus erstrecken, beispielsweise bis in den Zentralbereich. Auch ist es möglich, dass ein durchgängiger Reibbereich ausgebildet ist, der die Reibbereiche beider Befestigungsabschnitte umfasst.

Durch die sich formenden Befestigungsabschnitte, die in entgegensetzte Richtungen erstrecken, kann die Haltevorrichtung über den Montageabschnitt die Kontur der Oberfläche umgreifen, da die Befestigungsabschnitte an zumindest zwei im Wesentlichen entgegengesetzten Flächen der Oberfläche anliegen. Mit anderen Worten kann der Montageabschnitt derart geformt werden, dass er eine (im Wesentlichen) V-Geometrie aufweist, insbesondere wobei die beiden Befestigungsabschnitte den Schenkeln des V entsprechen.

Zudem kann der Zentralbereich des Montageabschnitts ebenfalls an der Oberfläche anliegen. Die beiden Schenkel, also die Befestigungsabschnitte, können dann über den Zentralbereich miteinander verbunden sein, sodass sich eine \_/-Kontur des Montageabschnitts ergibt.

Vorzugsweise ist das Metallblech im jeweiligen Übergang vom Zentralbereich zu den Befestigungsabschnitten derart ausgestaltet, dass sich die Befestigungsabschnitte relativ zum Zentralbereich verstellen lassen, beispielsweise durch eine Materialverjüngung bzw. eine Schwächungsstruktur im jeweiligen Übergang wie einer Kerbe.

Grundsätzlich lässt sich über das Formen der Befestigungsabschnitte der Öffnungswinkelbereich des V-förmigen bzw. des \_/-förmigen Montageabschnitts einstellen und an die Kontur der Oberfläche anpassen.

Bevorzugt ist das Metallblech aus Aluminium gebildet. Aluminium ist witterungs- und korrosionsbeständig und eignet sich daher in besonderem Maße als Komponente für Blitzschutzanlagen im Freien. Zudem können Metallbleche aus Aluminium verformbar ausgestaltet werden, ohne die mechanische Belastbarkeit des verformten Metallblechs übermäßig zu beeinträchtigen.

Der Montageabschnitt kann durch ein zum Halteabschnitt separat ausgebildetes Montageelement ausgebildet sein. Anders ausgedrückt kann es sich beim Montageabschnitt um ein separates Bauteil handeln, dass am Halteabschnitt befestigt wird, beispielsweise bevor oder während die Haltevorrichtung angebracht wird. Insbesondere ermöglicht eine solche Ausgestaltung, dass der Montageabschnitt und der Halteabschnitt aus unterschiedlichen Materialien gefertigt sind. Zudem lässt sich ein anderer Halteabschnitt vorsehen, sofern eine besonders geformte Fangleitung gehalten werden soll.

Das Montageelement kann mittels eines Bügels am Halteabschnitt angebracht sein, wobei das Montageelement wenigstens teilweise zwischen dem Halteabschnitt und dem Bügel angeordnet ist. Der Bügel ermöglicht es, Teile eines Befestigungsmittels, mit dem der Montageabschnitt mit dem Halteabschnitt verbunden ist, in einem Zwischenraum aufzunehmen, der zwischen der Oberfläche und dem Bügel ausgebildet ist. Auf diese Weise muss das Befestigungsmittel nicht in Kontakt mit der Oberfläche stehen. Das Befestigungsmittel ist beispielsweise eine Schraube, dessen Schraubenkopf im Zwischenraum aufgenommen ist.

Um die Verformbarkeit des Montageabschnitts zu erhöhen, kann der Montageabschnitt wenigstens eine Schwächungsstruktur zum Verformen des Montageabschnitts aufweisen, beispielsweise eine Materialverjüngung.

Die Schwächungsstruktur ist beispielsweise durch eine lokal begrenzte reduzierte Materialdicke des Montageabschnitts oder eine Ausstanzung realisiert.

Die Aufgabe wird ferner erfindungsgemäß gelöst durch ein Blitzschutzsystem umfassend wenigstens eine Haltevorrichtung wie zuvor beschrieben. Das Blitzschutzsystem weist zudem wenigstens eine Fangleitung auf, die im Halteabschnitt aufgenommen ist.

Die Merkmale und Eigenschaften der Haltevorrichtung gelten entsprechend für das erfindungsgemäße Blitzschutzsystem und umgekehrt.

Weiter wird die Aufgabe erfindungsgemäß gelöst durch die Verwendung einer Haltevorrichtung wie zuvor beschrieben zum Befestigen einer Fangleitung eines Blitzschutzsystems auf einer unebenen Oberfläche, insbesondere wobei die unebene Oberfläche ein Dach oder eine Fassade ist.

Der Einsatz der erfindungsgemäßen Haltevorrichtung ermöglicht eine flexible und werkzeugfreie Montage der Haltevorrichtung, sodass die Fangleitung einfach und mit einem beliebigen Verlauf entlang der unebenen Oberfläche angebracht werden kann. Dies ist insbesondere dadurch möglich, dass der Montageabschnitt flexibel an die jeweiligen örtlichen Gegebenheiten angepasst werden kann.

Bevorzugt ist die unebene Oberfläche ein Wellblechdach oder ein Trapezblechdach.

Mit anderen Worten kann die zuvor beschriebene Haltevorrichtung an der unebenen Oberfläche angebracht werden, indem der Montageabschnitt, insbesondere die Befestigungsabschnitte, an die Kontur der unebenen Oberfläche angepasst wird. Anschließend wird die Haltevorrichtung über den Montageabschnitt auf die unebene Oberfläche gesetzt, wobei die Haltevorrichtung über den Reibbereich an der unebenen Oberfläche fixiert wird, beispielsweise aufgeklebt wird.

Weitere Merkmale und Eigenschaften ergeben sich aus der nachfolgenden Beschreibung beispielhafter Ausführungsformen, die nicht in einem einschränkenden Sinn verstanden werden sollen, sowie den Zeichnungen, auf die Bezug genommen wird. In diesen zeigen:
- Fig. 1 schematisch eine erste Ausführungsform einer erfindungsgemäßen Haltevorrichtung in einer teilweisen Explosionsdarstellung,
- Fig. 2 ein erfindungsgemäßes Blitzschutzsystem mit der Haltevorrichtung aus Fig. 1,
- Fig. 3a und 3b ausgewählte Teile der Haltevorrichtung aus Fig. 1 während eines Montageprozesses,
- Fig. 4 eine zweite Ausführungsform der erfindungsgemäßen Haltevorrichtung,
- Fig. 5 die Haltevorrichtung aus Fig. 4 während der Montage auf einer unebenen Oberfläche,
- Fig. 6 bis 8 alternative unebene Oberflächen, bei denen die Haltevorrichtung aus Fig. 4 eingesetzt werden kann,
- Fig. 9 eine dritte Ausführungsform der erfindungsgemäßen Haltevorrichtung,
- Fig. 10 eine Aufsicht auf eine vierte Ausführungsform der erfindungsgemäßen Haltevorrichtung nach Montage auf einer unebenen Oberfläche,
- Fig. 11 eine perspektivische Darstellung eines Details aus Fig. 10,
- Fig. 12 eine Seitenansicht auf ausgewählte Teile der Darstellung aus Fig. 11,
- Fig. 13 eine Schnittansicht durch ausgewählte Teile der Darstellung aus Fig. 12,
- Fig. 14 eine fünfte Ausführungsform der erfindungsgemäßen Haltevorrichtung in perspektivischer Darstellung,
- Fig. 15 eine Frontansicht der Haltevorrichtung aus Fig. 14, und
- Fig. 16 eine Seitensicht auf die Haltevorrichtung aus Fig. 14.

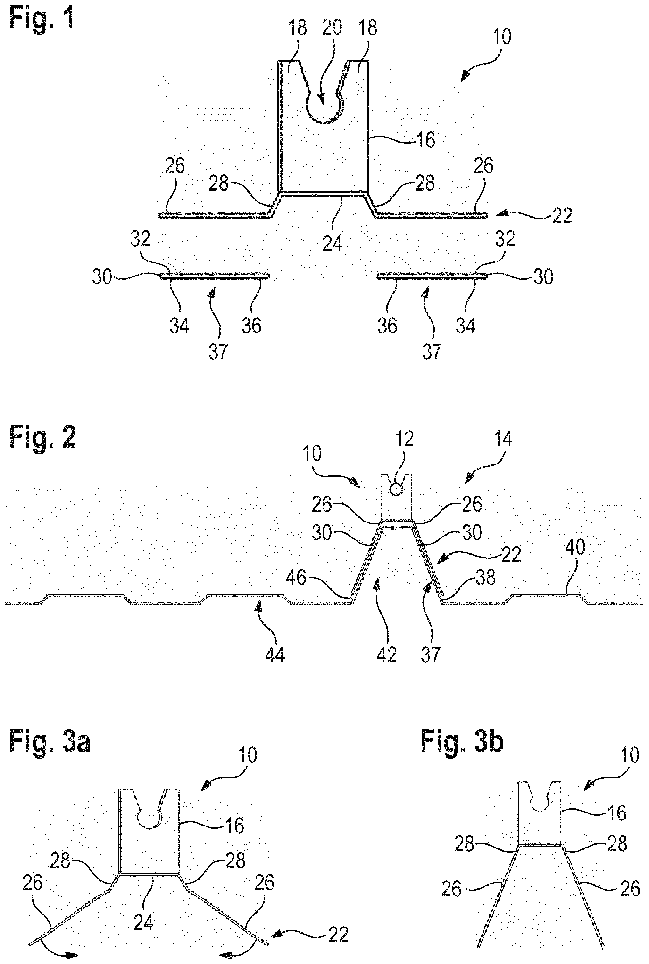

Fig. 1 zeigt, in einer teilweisen Explosionsdarstellung, schematisch eine erste Ausführungsform einer erfindungsgemäßen Haltevorrichtung 10 für eine Fangleitung 12 eines Blitzschutzsystems 14 (vgl. Fig. 2).

Die Haltevorrichtung 10 verfügt über einen Halteabschnitt 16, der dazu eingerichtet ist, die Fangleitung 12 aufzunehmen.

Der Halteabschnitt 16 umfasst mehrere, insbesondere zwei oder vier, Haltearme 18, die sich in Richtung einer zentralen Aufnahme 20 verdicken und federnd ausgebildet sind, wodurch die Haltearme 18 einen sich in Richtung der zentralen Aufnahme 20 verjüngenden Aufnahmebereich ausbilden, der in die zentrale Aufnahme 20 übergeht. Auf diese Weise kann die Fangleitung 12 zwischen den Haltearmen 18 hindurch in die zentrale Aufnahme 20 eingeführt und in dieser zuverlässig fixiert werden, wobei die Fangleitung 12 gleichzeitig ausgerichtet bzw. zentriert wird.

Für den Halteabschnitt 16 geeignete Bauteile sind beispielsweise unter den Bezeichnungen "DEHNgrip", "DEHNhold", "DEHNsnap" und "DEHNfix" von der Fa. DEHN SE erhältlich.

Die Haltevorrichtung 10 verfügt weiter über einen Montageabschnitt 22, der in der ersten Ausführungsform als ein langgestrecktes Metallblech aus Aluminium ausgebildet ist.

Der Montageabschnitt 22 verfügt über einen Zentralbereich 24, der dem Halteabschnitt 16 zugeordnet und in der ersten Ausführungsform stoffschlüssig mit diesem verbunden ist.

Ausgehend vom Zentralbereich 24 weist der Montageabschnitt 22 zwei Befestigungsabschnitte 26 auf, die sich ausgehend vom mittig angeordneten Zentralbereich 24 in entgegengesetzte Richtungen von diesem weg erstrecken.

Der Zentralbereich 24 und die Befestigungsabschnitte 26 sind in einer Ausgangsposition parallel zueinander und über Verbindungsabschnitte 28 miteinander verbunden, wobei die Verbindungsabschnitte 28 schräg vom Zentralbereich 24 in Richtung Befestigungsabschnitte 26 abstehen.

Demnach gibt es (winklige) Übergänge zwischen dem Zentralbereich 24 und den daran angrenzenden Verbindungsabschnitten 28 sowie zwischen den Verbindungsabschnitten 28 und den daran angrenzenden Befestigungsabschnitten 26.

Jeder der Befestigungsabschnitte 26 verfügt über ein zugeordnetes Klebepad 30, das in der Einbauposition der Haltevorrichtung 10 über eine Oberseite 32 des Klebepads 30 stoffschlüssig mit dem jeweiligem Befestigungsabschnitt 26 verbunden ist, und als doppelseitiges Klebepad 30 ausgeführt ist.

Unterseiten 34 des Klebepads 30 fungieren als Kontaktflächen 36 der Haltevorrichtung 10 für eine Kontur 38 der Oberfläche 40, auf der die Haltevorrichtung 10 aufgebracht werden soll. Die Unterseiten 34 können vor der Montage der Haltevorrichtung 10 mit einer Schutzfolie versehen sein, sodass das Klebepad 30 durch Abziehen der Schutzfolie einsatzbereit gemacht werden kann.

Durch den auf der Unterseite 34 des Klebepads 30 bereitgestellten Klebstoff weist der Montageabschnitt 22 im Bereich des Klebepads 30 einen höheren Reibwert auf als die Haltevorrichtung 10 auf einer zur Kontaktfläche 36 entgegengesetzten Seite.

Anders ausgedrückt weist der Montageabschnitt 22 einen Reibbereich 37 auf, der einen erhöhten Reibwert besitzt.

Die Klebepads 30 können vor der Montage der Haltevorrichtung 10 auch separat von den übrigen Bestandteilen der Haltevorrichtung 10 vorliegen. Beispielsweise werden die übrigen Bestandteile der Haltevorrichtung 10 in einer ersten Vorratseinheit und die Klebepads 30, die in Einbauposition den jeweiligen Befestigungsabschnitten 26 zugeordnet sind, in einer zweiten Vorratseinheit bereitgestellt und werden erst während der Montage der Haltevorrichtung 10 aneinandergefügt.

In Fig. 2 ist ein erfindungsgemäßes Blitzschutzsystem 14 dargestellt, das die zuvor beschriebene Haltevorrichtung 10 dazu nutzt, eine Fangleitung 12 zu befestigen.

Das Blitzschutzsystem 14 ist in der gezeigten Ausführungsform auf einem Trapezblechdach angebracht, das aufgrund der vorhandenen Erhebungen 42 und 44, die trapezförmig sind, eine unebene Oberfläche 40 aufweist, auf der die Haltevorrichtung 10 zuverlässig befestigt werden muss.

Wie in Fig. 2 zu erkennen ist, sind die Befestigungsabschnitte 26 in der Einbauposition der Haltevorrichtung 10 derart umgebogen, dass diese parallel zu Seitenflanken 46 der trapezförmigen Erhebung 42 verlaufen, sodass der Montageabschnitt 22 über die Kontaktflächen 36, also dem an den Unterseiten 34 der Klebepads 30 vorhandenem Reibbereich 37, stoffschlüssig mit den Seitenflanken 46 verbunden ist.

Dies ist möglich, da erfindungsgemäß der Montageabschnitt 22 verformbar ausgestaltet ist, insbesondere über die Übergänge, sodass die Gestalt des Montageabschnitts 22 an die jeweilige Kontur 38 der Oberfläche 40 angepasst werden kann.

Zwischenschritte dieses Anpassungsprozesses sind in den Fig. 3a und 3b gezeigt, wobei aus Gründen der Übersichtlichkeit auf die Darstellung der Klebepads 30 verzichtet wird.

Wie durch Pfeile in Fig. 3a angedeutet ist, können die Befestigungsabschnitte 26 aufeinander zubewegt werden. Dabei dient die Verbindung zwischen dem Verbindungsabschnitt 28 und dem Befestigungsabschnitt 26, also der entsprechende Übergang, als Schwenkpunkt.

Es ist auch möglich, dass die Befestigungsabschnitte 26 eine Vorspannung aufweisen, wobei die Vorspannung derart ausgestaltet ist, dass die Erhebungen 42 bzw. 44 gegen die Vorspannung der Befestigungsabschnitte 26 wirken. Auf diese Weise wird der Kontakt zwischen den Befestigungsabschnitten 26 und der jeweiligen Oberfläche 40 weiter erhöht, da sich die Erhebungen 42 bzw. 44 über die Vorspannkraft an die Befestigungsabschnitte 26 andrücken.

In der gezeigten Ausführungsform ist die Ausrichtung des Verbindungsabschnitts 28 so gewählt, dass bei Erreichen der Endposition, in der die Befestigungsabschnitte 26 parallel zu den Seitenflanken 46 der trapezförmigen Erhebung 42 sind (vgl. Fig. 2), die Befestigungsabschnitte 26 zugleich in der gleichen Ebene liegen wie der jeweils zugeordnete Verbindungsabschnitt 28 (vgl. Fig. 3b).

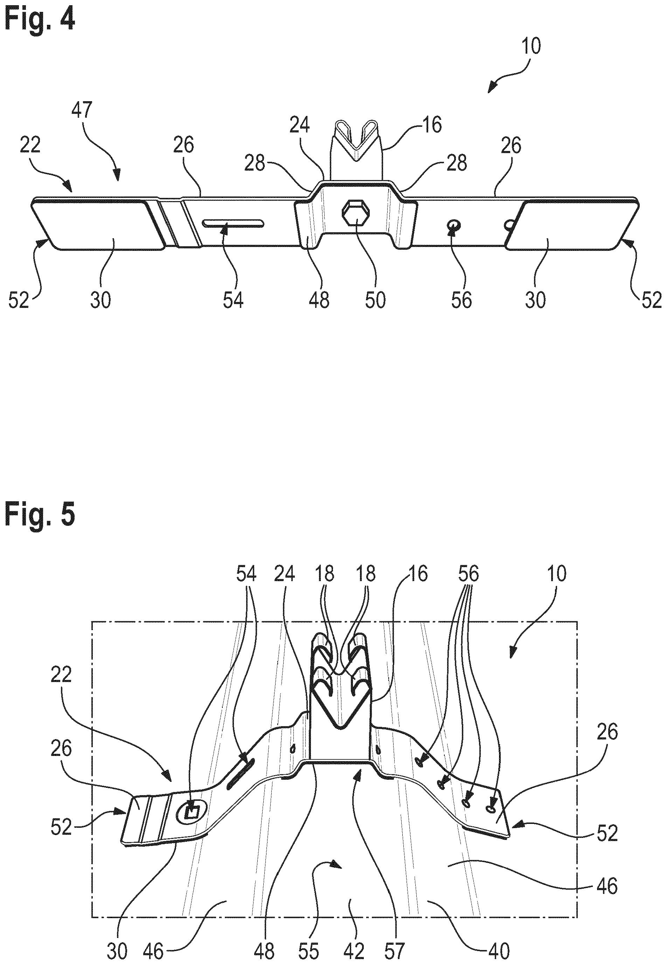

In Fig. 4 ist eine zweite Ausführungsform der erfindungsgemäßen Haltevorrichtung 10 gezeigt.

Die weiteren Ausführungsformen entsprechen im Wesentlichen der ersten Ausführungsform, sodass im Folgenden lediglich auf Unterschiede eingegangen wird. Gleiche Bezugszeichen bezeichnen gleiche oder funktionsgleiche Bauteile und es wird auf die obigen Ausführungen verwiesen.

In der zweiten Ausführungsform ist der Montageabschnitt 22 als separates Montageelement 47 zum Halteabschnitt 16 ausgebildet.

Der Montageabschnitt 22 wird im Zentralbereich 24 zwischen dem Halteabschnitt 16 und einem Bügel 48 gehalten, wobei Halteabschnitt 16, Montageabschnitt 22 und Bügel 48 über ein Befestigungsmittel 50 aneinander fixiert sind.

Als Befestigungsmittel 50 dient in der gezeigten Ausführungsform eine Schraube. Es versteht sich, dass auch andere Arten an Befestigungsmittel 50 eingesetzt werden können, solange eine ausreichend sichere Fixierung von Halteabschnitt 16, Montageabschnitt 22 und Bügel 48 gewährleistet ist.

Ferner sind in der zweiten Ausführungsform die Befestigungsabschnitte 26 relativ zur räumlichen Ausdehnung des Zentralbereichs 24 größer ausgebildet als in der ersten Ausführungsform.

Die Klebepads 30 sind in Endbereichen 52 der Befestigungsabschnitte 26 angeordnet und erstrecken sich nicht über deren gesamte Länge.

Die Befestigungsabschnitte 26 verfügen zudem über Materialverjüngungen bzw. Schwächungsstrukturen 54 und 56, wobei die Schwächungsstrukturen 54 im gezeigten Ausführungsbeispiel als sich in Erstreckungsrichtung des Befestigungsabschnitts 26 länglich verlaufende Ausstanzung bzw. Vorprägung und die Schwächungsstrukturen 56 als kreisförmige Ausstanzungen bzw. Vorprägung realisiert sind.

Selbstverständlich können die Befestigungsabschnitte 26 auch in dieser Ausführungsform als Vollmaterial ausgebildet sein, das heißt, ohne Schwächungsstrukturen. Ferner kann auch vorgesehen sein, dass die Befestigungsabschnitte 26 weder Materialverjüngungen noch Schwächungsstrukturen haben.

Über die Anzahl, Position, Art und Größe der jeweiligen Schwächungsstruktur kann das Verhalten des jeweiligen Befestigungsabschnitts 26 gezielt beeinflusst werden. Beispielsweise sind auch quer zur Erstreckungsrichtung des Befestigungsabschnitts 26 verlaufende Kerben denkbar.

Fig. 5 zeigt die Haltevorrichtung 10 während der Montage auf einem Trapezblechdach als unebene Oberfläche 40.

Wie zu erkennen ist, weisen die Befestigungsabschnitte 26 eine Länge auf, die es gestattet, die Gestalt der Befestigungsabschnitte 26 an den Verlauf und die Kontur 38 der Oberfläche 40 anzupassen, sodass die Endbereiche 52, die die Klebepads 30 aufweisen, an einer geeigneten Stelle mit der Oberfläche 40 kontaktiert und somit an dieser befestigt werden können.

In Fig. 5 ist zudem zu erkennen, dass der Zentralbereich 24 durch den Bügel 48 von einer Oberseite 55 der Erhebung 42 beabstandet ist, sodass ein Zwischenraum 57 vorliegt, in dem Teile des Befestigungsmittels 50 aufgenommen sind. Auf diese Weise muss das Befestigungsmittel 50 nicht in direktem Kontakt mit der Oberfläche 40 stehen.

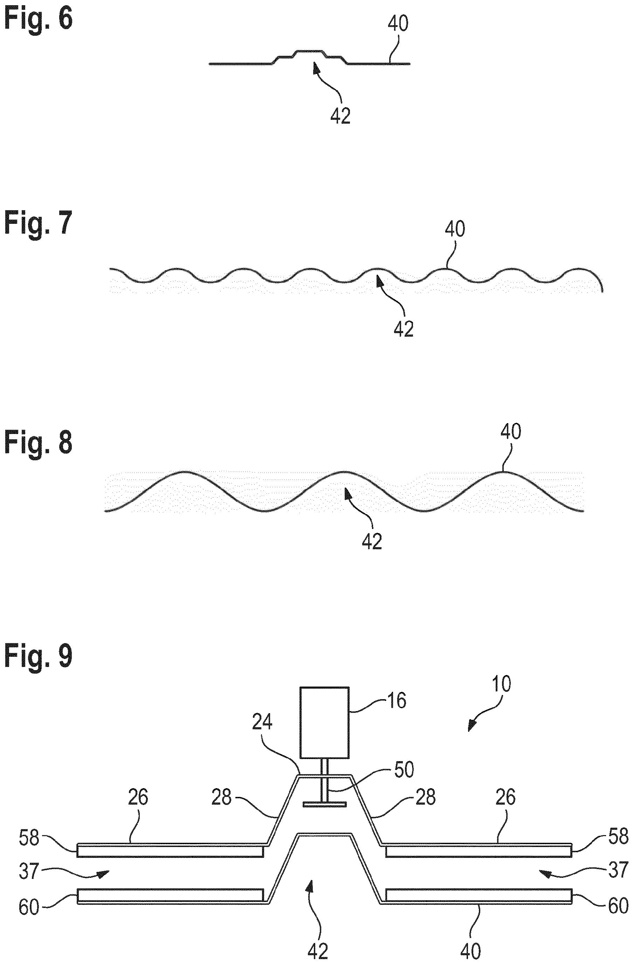

Somit kann die erfindungsgemäße Haltevorrichtung 10 für beliebige Ausgestaltungen der unebenen Oberfläche 40 angepasst werden, beispielsweise für hierarchisch aufgebaute Trapezblechdächer mit mehrstufigen Erhebungen 42 (Fig. 6) sowie Wellblechdächern mit abgerundeten Erhebungen 42 unterschiedlichster räumlicher Ausdehnung (vgl. Fig. 7 und 8).

In Fig. 9 ist eine dritte Ausführungsform der erfindungsgemäßen Haltevorrichtung 10 gezeigt.

In dieser Ausführungsform sind die Befestigungsabschnitte 26 mit Klettbändern 58 versehen, die dazu dienen, den Reibwert der Haltevorrichtung 10 im Reibbereich 37 zu erhöhen.

Auf der Oberfläche 40 sind komplementär zum Klettband 58 ausgebildete Gegenstücke 60 aufgebracht, die in Einbauposition der Haltevorrichtung 10 mit dem Klettband 58 zusammenwirken und auf diese Weise die Haltevorrichtung 10 sichern.

Grundsätzlich ist es auch möglich, die Haltevorrichtung 10 selbst zweiteilig auszugestalten, wobei die Teile analog zur Ausgestaltung in Fig. 9 über Klettbänder 58 und Gegenstücke 60 miteinander verbunden sind und anschließend über einen separat ausgebildeten Reibbereich 37 mit der Oberfläche 40 verbunden werden, beispielsweise über einen Klebeabschnitt auf die Oberfläche 40 aufgeklebt werden.

Diese Variante hat den Vorteil, dass die Haltevorrichtung 10 über die Klettverbindung wieder gelöst werden kann, da lediglich das auf der Oberfläche 40 aufgeklebte Klettband verbleibt.

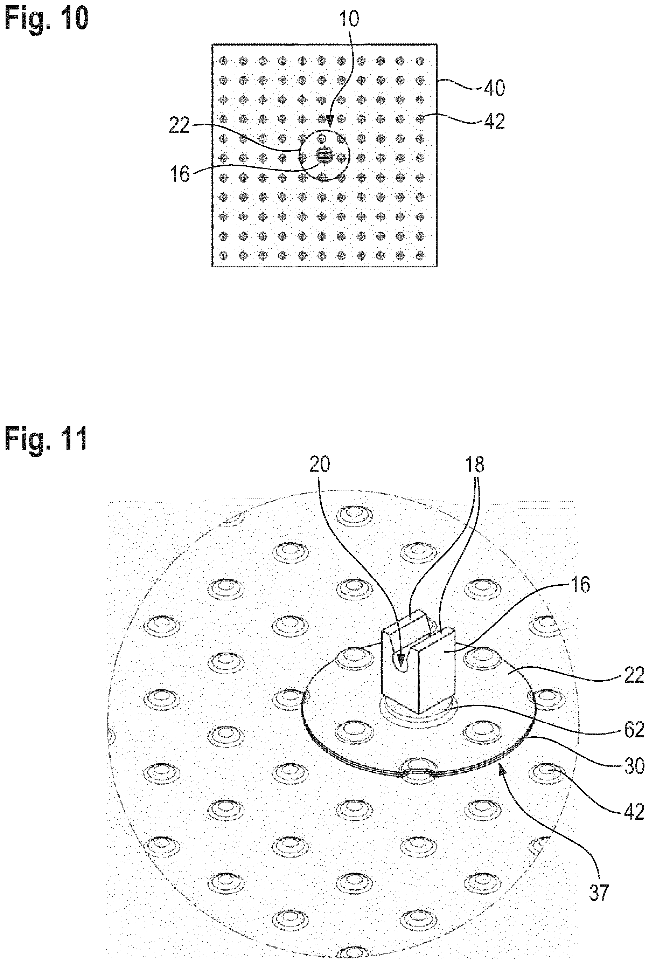

Fig. 10 zeigt eine Aufsicht auf eine vierte Ausführungsform der erfindungsgemäßen Haltevorrichtung 10.

In der vierten Ausführungsform ist die Haltevorrichtung 10 auf einer unebenen Oberfläche 40 aufgebracht, die über eine Vielzahl von regelmäßig angeordneten Erhebungen 42 verfügt, die kugelsegmentförmig hervorstehen.

Grundsätzlich sind auch andere Arten von unebenen Oberflächen denkbar, auf denen die erfindungsgemäße Haltevorrichtung 10 angebracht werden kann, beispielsweise strukturierte Oberflächen wie strukturierte Trapezdächer, Tränenbleche, Riffelbleche, Bleche mit simulierter Lederoptik und gehämmerte Oberflächen.

Fig. 11 stellt eine perspektivische Ansicht auf einen Teil der Darstellung aus Fig. 10 dar.

Die vierte Ausführungsform der Haltevorrichtung 10 verfügt neben dem Halteabschnitt 16 über einen Montageabschnitt 22, der über eine im Wesentlichen kreisförmige Außenkontur verfügt, wobei der Halteabschnitt 16 über ein Verbindungsstück 62 mit dem Montageabschnitt 22 verbunden ist.

An der Unterseite des Montageabschnitts 22 ist ein Klebepad 30 zum Ausbilden des Reibbereichs 37 vorgesehen, wobei das Klebepad 30 im Wesentlichen die gesamte Unterseite des Montageabschnitts 22 bedeckt.

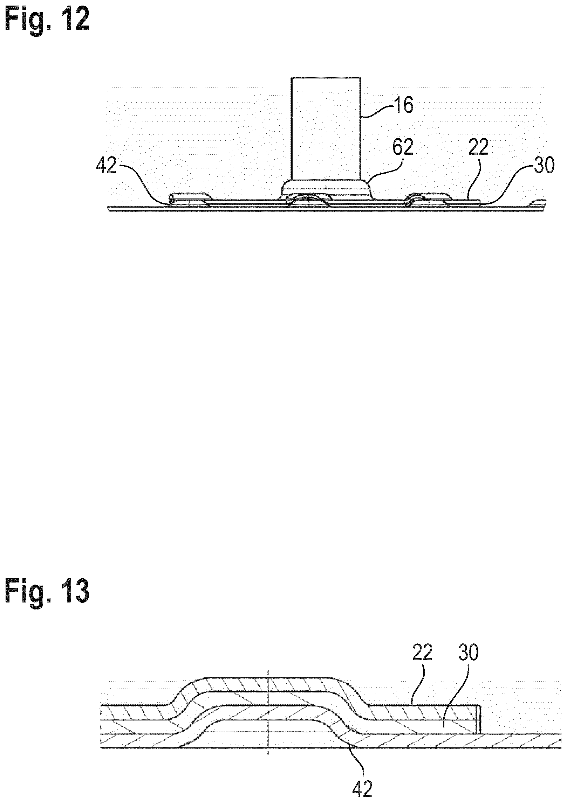

Der Montageabschnitt 22 ist derart ausgeführt, dass sich die Kontur des Montageabschnitts 22 an die Erhebungen 42 anpasst. Anders ausgedrückt wölbt sich der Montageabschnitt 22 an den Positionen, an denen der Montageabschnitt 22 mit einer der Erhebungen 42 zusammenfällt, nach oben, wie beispielsweise in der Seitenansicht in Fig. 12 sowie in der Schnittansicht von Fig. 13 zu erkennen ist.

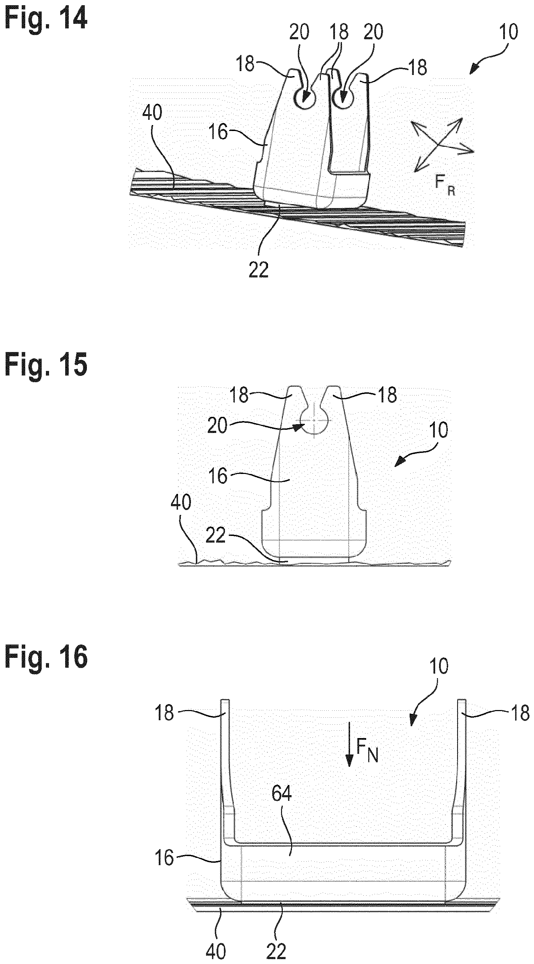

In den Fig. 14 bis 16 ist eine fünfte Ausführungsform der erfindungsgemäßen Haltevorrichtung 10 gezeigt.

In der fünften Ausführungsform ist der Montageabschnitt 22 mit der Unterseite des Halteabschnitts 16 verbunden, das heißt mit der zur Oberfläche 40 weisenden Seite des Halteabschnitts 16. Beispielsweise ist der Montageabschnitt 22 mittels eines 2K-Spritzguss angespritzt oder aufvulkanisiert.

Das Material des Montageabschnitts 22 ist dabei so gewählt, dass es sich unter Einwirkung einer Kraft F_{N} (vgl. Fig. 16) auf eine Innenfläche 64 der Kontur der Oberfläche 40 anpasst und auf diese Weise eine einen Reibbereich 37 erzeugt, der die Haltevorrichtung 10 über eine Reibkraft F_{R} (vgl. Fig. 14) sichert.

Der Montageabschnitt 22 kann auch zusätzlich oder anstelle eines 2K-Spritzgusselements über ein Klebepad 30 (vgl. Fig. 1) ausgebildet sein.

Insgesamt zeichnen sich die erfindungsgemäßen Haltevorrichtungen 10 dadurch aus, dass sie flexibel auf unterschiedlichsten Oberflächen 40 eingesetzt und gesichert werden können. Zudem können die erfindungsgemäßen Haltevorrichtungen 10 werkzeuglos am Einsatzort montiert werden.

## Patentansprüche

1. Haltevorrichtung (10) für eine Fangleitung (12) eines Blitzschutzsystems (14), mit einem Halteabschnitt (16) zur Aufnahme der Fangleitung (12) sowie einem Montageabschnitt (22) zum Befestigen der Haltevorrichtung (10) auf einer unebenen Oberfläche (40),
wobei zumindest der Montageabschnitt (22) der Haltevorrichtung (10) verformbar ausgestaltet ist, sodass der Montageabschnitt (22) an eine Kontur (38) der Oberfläche (40) anpassbar ist, und
wobei der Montageabschnitt (22) an einer in Einbauposition mit der Kontur (38) der Oberfläche (40) zusammenwirkenden Kontaktfläche (36) einen Reibbereich (37) hat, der einen höheren Reibwert als die Haltevorrichtung (10) auf einer zur Kontaktfläche (36) entgegengesetzten Seite aufweist.

2. Haltevorrichtung nach Anspruch 1, wobei der Reibbereich (37) durch eine Aufrauung des Montageabschnitts (22) im Bereich der Kontaktfläche (36) ausgebildet ist.

3. Haltevorrichtung nach Anspruch 1, wobei der Reibbereich (37) über ein Reibmaterial bereitgestellt ist, das stoffschlüssig mit dem Montageabschnitt (22) im Bereich der Kontaktfläche (36) verbunden ist.

4. Haltevorrichtung nach Anspruch 3, wobei das Reibmaterial ein Klettband (58) und/oder ein Klebepad (30) umfasst.

5. Haltevorrichtung nach einem der vorhergehenden Ansprüche, wobei der Montageabschnitt (22) ein Metallblech ist, an dem mittig der Halteabschnitt (16) vorgesehen ist.

6. Haltevorrichtung nach Anspruch 5, wobei zwei sich von der Mitte ausgehend in entgegengesetzte Richtungen erstreckende Befestigungsabschnitte (26) vorhanden sind, an denen jeweils ein Reibbereich (37) vorgesehen ist.

7. Haltevorrichtung nach Anspruch 5 oder 6, wobei das Metallblech aus Aluminium gebildet ist.

8. Haltevorrichtung nach einem der vorhergehenden Ansprüche, wobei der Montageabschnitt (22) durch ein zum Halteabschnitt (16) separat ausgebildetes Montageelement (47) ausgebildet ist.

9. Haltevorrichtung nach Anspruch 8, wobei das Montageelement (47) mittels eines Bügels (48) am Halteabschnitt (16) angebracht ist, wobei das Montageelement (47) wenigstens teilweise zwischen dem Halteabschnitt (16) und dem Bügel (48) angeordnet ist.

10. Haltevorrichtung nach einem der vorhergehenden Ansprüche, wobei der Montageabschnitt (22) wenigstens eine Schwächungsstruktur (54, 56) zum Verformen des Montageabschnitts (22) aufweist.

11. Blitzschutzsystem (14) umfassend wenigstens eine Haltevorrichtung (10) nach einem der vorhergehenden Ansprüche, wobei das Blitzschutzsystem (14) wenigstens eine Fangleitung (12) aufweist, die im Halteabschnitt (16) aufgenommen ist.

12. Verwendung der Haltevorrichtung (10) nach einem der Ansprüche 1 bis 10 zum Befestigen einer Fangleitung (12) eines Blitzschutzsystems (14) auf einer unebenen Oberfläche (40).

13. Verwendung nach Anspruch 12, wobei die unebene Oberfläche (40) ein Dach oder eine Fassade ist.
